**Europäisches Patentamt**

**European Patent Office**

**Office européen des brevets**

(11) Veröffentlichungsnummer : **0 031 939**
**B1**

# (12) EUROPÄISCHE PATENTSCHRIFT

(45) Veröffentlichungstag der Patentschrift :
**07.12.83**

(21) Anmeldenummer : **80108091.2**

(22) Anmeldetag : **20.12.80**

(51) Int. Cl.³ : **B 09 B 3/00**, F 23 G 5/02, C 10 B 53/00

(54) **Verfahren und Vorrichtung zur Verarbeitung von Müll.**

(30) Priorität : **05.01.80 DE 3000236**

(43) Veröffentlichungstag der Anmeldung :
**15.07.81 Patentblatt 81/28**

(45) Bekanntmachung des Hinweises auf die Patenterteilung : **07.12.83 Patentblatt 83/49**

(84) Benannte Vertragsstaaten :
**AT BE CH DE FR GB IT LI LU NL SE**

(56) Entgegenhaltungen :
DE-A- 1 940 434
DE-A- 2 108 393
DE-A- 2 550 142
DE-A- 2 906 810
FR-A- 2 098 378
FR-A- 2 366 354
FR-A- 2 385 037
FR-A- 2 401 978
US-A- 3 027 854
US-A- 3 098 458
US-A- 3 668 077

(73) Patentinhaber : Schäfer, Thomas
Bonnemühle
D-6234 Hattersheim 3 (DE)

Schäfer, Winfried
Bonnemühle
D-6234 Hattersheim 3 (DE)

(72) Erfinder : Schäfer, Thomas
Bonnemühle
D-6234 Hattersheim 3 (DE)
Erfinder : Schäfer, Winfried
Bonnemühle
D-6234 Hattersheim 3 (DE)

(74) Vertreter : Blumbach Weser Bergen Kramer Zwirner
Hoffmann Patentanwälte
Sonnenbergerstrasse 43
D-6200 Wiesbaden 1 (DE)

Verfahren und Vorrichtung zur Verarbeitung von Müll

Die Erfindung betrifft ein Verfahren zur Verarbeitung von Rohmüll zu einer speicherungsfähigen Form, die keine Beeinträchtigung der Umwelt mit sich bringt, wobei der Müll getrocknet und gepreßt wird.

Rohmüll neigt durch seine wechselnde Zusammensetzung und seinen Wassergehalt zum Gären und Faulen. Die dabei entstehenden übelriechenden Gär- und Faulgase belasten die Umwelt und stellen eine beachtliche Infektionsquelle dar.

Da Mülldeponien zunehmend knapper werden, muß der feuchte Rohmüll in zunehmendem Maße in Müllverbrennungsanlagen verbrannt werden. Derzeit wird der eingesammelte Rohmüll in seinem feuchten Ursprungszustand in Bunker geschüttet und möglichst kurzzeitig zwischengelagert, um die Umwelbelastung so gering wie möglich zu halten. Eine Vorratshaltung an Rohmüll ist aus den genannten Gründen nicht möglich.

Es ist bisher unmöglich, den Rohmüll von der Anlieferung bis zur Verbrennung umweltfreundlich, d. h. unter Abschluß von der Außenluft, aufzubewahren. Die Beförderung erfolgt über Schüttrutschen, mit Krananlagen, Förderbändern odgl. unter freiem Außenluftzutritt.

Eine an sich erwünschte Sortierung und Mahlung des feuchten Rohmülls ist sehr schwierig.

Es ist bereits ein Verfahren der eingangs genannten Art bekannt geworden, bei dem zur Beseitigung von Müll aus Haushalten, Handwerks- und Kleingewerbebetrieben der Müll am Entstehungsort zerkleinert, bei etwa 120 °C getrocknet und anschließend gepreßt und wasserdicht verpackt wird (siehe DE-A-1 940 434). Eine solche dezentralisierte Aufbereitung des Mülls und eine damit verbundene Speicherung ist apparativ aufwendig und die dabei vorgeschlagene Trocknung durch Nachtstromaggregate energiemäßig sehr aufwendig. Neben einem Trocknen und Verbrennen des Mülls in Verbrennungsöfen ist es auch bekannt geworden, daß der Müll beim Einschleusen in ein System gepreßt und verdichtet wird, so daß er einen im wesentlichen gasdichten Abschluß bildet, um dann Verbrennungsöfen, wie Drehrohröfen udgl., zugeführt zu werden (siehe FR-A-2 098 378). Dabei wird aber eine kontinuierliche Müllzufuhr vorausgesetzt, und die Probleme, die in einer diskontinuierlichen bzw. stoßweisen Anlieferung und der damit erforderlichen Ablagerung bzw. Bevorratung auftreten, werden dabei nicht gelöst.

Der Erfindung liegt daher die Aufgabe zugrunde, durch ein geeignetes Verfahren und eine entsprechende Vorrichtung Möglichkeiten zu schaffen, in technisch sinnvoller und vor allem energiewirtschaftlich vertretbarer Weise Rohmüll so zu verarbeiten, daß er beliebig lange lagerfähig ist, so daß eine Bevorratung ermöglicht wird.

Die erfindungsgemäße Lösung besteht aus einer Kombination zum Teil bekannter Merkmale und zeichnet sich dadurch aus, daß der Müll in ein von der Außenluft abgeschlossenes Kanalsystem eingeschleust wird, daß der Müll durch das Kanalsystem mittels eines Transportgases transportiert wird und daß der Müll mittels eines erwärmten Transportgases während des Transports getrocknet und dabei entgast wird.

Dabei wird in vorteilhafter Weise ein Transportgas ohne Sauerstoffgehalt verwendet, welches im Müll enthaltene Feuchtigkeit in Dämpfe umwandelt, die den Müll-transport unterstützen.

In wirtschaftlicher Weise wird als Transportgas ein Niedertemperatur-Abgas einer Müllverbrennung benutzt, welches an dem noch feuchten Müll gefiltert wird.

Eine Weiterbildung des erfindungsgemäßen Verfahrens besteht darin, daß durch Wärmezufuhr innerhalb des Kanalsystems im Müll ein Teilabbrand und/oder eine Pyrolyse durchgeführt wird und die dabei entstehenden Dämpfe und Gase zum Mülltransport durch das System genutzt werden.

Bei einem bevorzugten Ausführungsbeispiel der Erfindung durchläuft der Müll im System eine Entspannungskammer, wobei der Müll ausdampft und das Kondensat gegebenenfalls unter Kältezufuhr abgeschieden wird. Eine Weiterbildung der Erfindung besteht darin, daß ein Teil des Kanalsystems von außen beheizt wird und dadurch im Müll Dämpfe entstehen, die den Müll durch den Kanal transportieren. Feste, flüssige oder gasförmige Zuschlagstoffe können dabei in das Kanalsystem eingespeist werden, wobei deren Dämpfe den Transport des Mülls bewirken oder unterstützen.

Die Erfindung macht gleichermaßen eine Vorrichtung zur Durchführung des Verfahrens verfügbar. Diese Vorrichtung zeichnet sich aus durch ein von der Außenluft abgeschlossenes Kanalsystem mit einer im wesentlichen gasdicht arbeitenden Mülleinlaßschleuse, die aus einem Einlauftrichter für Rohmüll und einem an diesen anschließenden Einpreßkanal mit Verdichter gebildet ist, durch einen in den Transportkanal einmündenden Anschluß zum Zuführen eines erwärmten Transportgases und durch eine im wesentlichen gasdicht arbeitende Müllauslaßschleuse. Vorteilhafte Ausbildungen und Weiterbildungen der Vorrichtungen bestehen darin, daß der Einpreßkanal einen Müllrückfluß behindernde Elemente enthält, daß der Transportkanal einen größeren Querschnitt als der Einpreßkanal hat, daß eine Einrichtung zur Wärmezufuhr zum Transportkanal vorgesehen ist, um im Müll einen Teilabbrand und/oder eine Pyrolyse zu erzeugen, daß eine Entspannungskammer zur Kondensierung der gebildeten Dämpfe und deren Ableitung aus dem Kanal vorgesehen ist, und daß in den Transportkanal ein Anschluß zum Zuführen von Zuschlagstoffen einmündet.

Ferner kann vorgesehen sein, am Auslaß des Kanalsystems eine Weiche anzuordnen, um den getrockneten Müll wahlweise ganz oder teilweise noch einmal in den Einfülltrichter zu leiten, um den Trockenzyklus bei Bedarf wiederholen zu können.

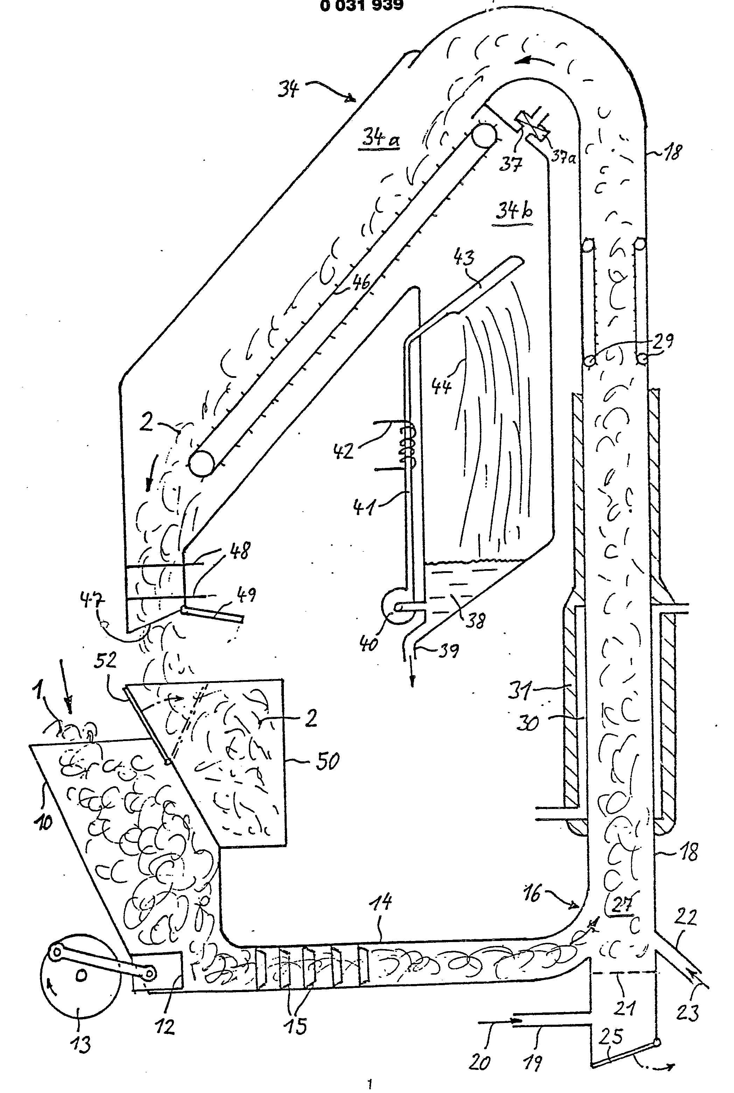

Nachstehend wird ein die Merkmale der Erfindung aufweisendes Ausführungsbeispiel unter Bezugnahme auf eine Zeichnung, in deren einziger Figur die nachstehend beschriebene Müllverarbeitungsvorrichtung geschnitten und schematisch dargestellt ist, näher erläutert.

In einen Einlauftrichter 10 der Müllverarbeitungsvorrichtung wird gesammelter Rohmüll 1 mit beliebiger Zusammensetzung und meist hohem Wassergehalt eingefüllt und mittels eines als Kolben ausgebildeten Verdichters 12 mit rotierendem Antrieb 13 in eine allseitig geschlossene Einförderstrecke 14 gepreßt. Konische Ringeinsätze 15 innerhalb der Einförderstrecke 14 verhindern eine Müllrückströmung. Der Rohmüll 1 ist im Bereich der Einförderstrecke 14 so komprimiert, daß an diesem Ende der Vorrichtung ein im wesentlichen gasdichter Abschluß gebildet wird. Der Rohmüll erreicht über ein T-Stück 16 einen Transportkanal 18 mit größerem Volumen, so daß er entspannt wird. In eine innerhalb des T-Stücks 16 gebildete Einförderzone 27 wird aus einem Anschlußrohr 19 und durch ein Sieb 21 ein erwärmtes Druckgas 20 zugeführt, welches vorzugsweise Niedertemperatur-Abgas einer nicht dargestellten Müllverbrennungsanlage ist und wenig oder keinen Sauerstoff enthält. Im Druckgas-Zuführbereich ist der Transportkanal 18 durch eine Explosionsklappe 25 verschlossen, die sich bei Verpuffungen odgl. öffnen kann. Zusätzlich können über ein Anschlußrohr 22 Zuschlagstoffe, wie beispielsweise Faul- oder Gärgase, Altöl, getrockneter Klärschlamm odgl., dem Müll zugemischt werden, die durch ihren Druck oder die sich entwickelnden Gase und Dämpfe den Müll im Transportkanal 18 weiterbewegen oder dessen Förderung unterstützen. Die durch die Zuschlagstoffe und/oder das erwärmte Druckgas bewirkte Erwärmung des Mülls im Transportkanal 18 kann durch einen Außenheizmantel 30 gesteigert werden. Zur Vermeidung von Wärmeverlusten ist der Außenheizmantel 30 und der Transportkanal 18 mit einer Isolierung 31 umkleidet.

Die Wärmezufuhr kann auch so gewählt werden, daß innerhalb des Kanalsystems 18 in dem Müll ein Teilabbrand und/oder eine Pyrolyse erzeugt wird, wobei die dabei entstehenden Dämpfe und Gase ebenfalls zum Mülltransport durch das System benutzt werden, wie auch allgemein durch Beheizung von außen die im Müll entstehenden Dämpfe dem Transport des Mülls durch den Kanal 18 dienen.

Zur Unterstützung des Warmgastransports im Transportkanal 18 enthält dieser zusätzliche Hilfsfördereinrichtungen 29 nach Art von Förderbändern odgl.

Am Ende des Transportkanals 18 gelangt der mit Dämpfen durchsetzte, erwärmte Müll in eine großvolumige Entspannungskammer 34, die in einen oberen Warmteil 34a mit Hilfsfördereinrichtung 46 und einen darunter liegenden Kaltteil 34b unterteilt ist. Im Warmteil 34a werden Wasserdämpfe und Fördergase abgegeben und über ein durch ein Ventil 37a verschließbares Absaugrohr 37 abgesaugt. Da auch ein Auslaß 47 des Kanalsystems, wie nachstehend erläutert wird, im wesentlichen gasdicht abgeschlossen ist, kann durch Gasabsaugung in der Entspannungskammer 34 ein Unterdruck erzeugt werden, der die Müllförderung im Transportkanal 18 unterstützt.

Im Kaltteil 34b der Entspannungskammer kondensieren die Wasserdämpfe und sammeln sich im unteren Bereich als Kondensat 38, welches über ein Ablaufrohr 39 abgeleitet und zum Teil mittels einer Pumpe 40 durch eine Leitung 41, die durch eine Kühlschlange 42 gekühlt ist, in eine Düsengruppe 43 gepumpt, wo das Kondensat in Form von Sprühstrahlen 44 austritt und die Dampfkondensation unterstützt.

Über den durch Schleusen 48 und/oder eine Klappe 49 verschließbaren Auslaß 47 des Kanalsystems gelangt getrockneter und entgaster Müll 2 einen Müllbunker 50, wo er bis zur späteren Müllverbrennung oder Sortierung ohne Schaden für die Umwelt gelagert werden kann.

Durch Umlegen einer Weiche 52 kann der getrocknete Müll 2 ganz oder teilweise wieder in den Einlauftrichter 10 rückgeführt werden, um den Müll gegebenenfalls in einem zweiten Durchlauf noch intensiver zu trocknen oder mit Rohmüll 1 zu vermischen.

**Ansprüche**

1. Verfahren zur Verarbeitung von Rohmüll zu einer speicherungsfähigen Form, in dem der Müll in ein von der Außenluft abgeschlossenes Kanalsystem eingeschleust wir dadurch gekennzeichnet, daß der Müll durch das Kanalsystem mittels eines Transportgases transportiert wird, daß der Müll mittels des erwärmten Transportgases während des Transports getrocknet und dabei entgast wird, und daß der getrocknete und entgaste Müll gepreßt wird.

2. Verfahren nach Anspruch 1, dadurch gekennzeichnet, daß ein Transportgas ohne Sauerstoffgehalt verwendet wird, welches im Müll enthaltene Feuchtigkeit in Dämpfe umwandelt, die den Mülltransport unterstützen.

3. Verfahren nach Anspruch 1 oder 2, dadurch gekennzeichnet, daß als Transportgas ein Niedertemperatur-Abgas einer Müllverbrennung benutzt wird, das an dem noch feuchten Müll gefiltert wird.

4. Verfahren nach einem der Ansprüche 1-3, dadurch gekennzeichnet, daß durch Wärmezufuhr innerhalb des Kanalsystems im Müll ein Teilabbrand und/oder eine Pyrolyse durchgeführt wird und die dabei entstehenden Dämpfe und Gase zum Mülltransport durch das System genutzt werden.

5. Verfahren nach Anspruch 1, dadurch gekennzeichnet, daß der Müll im System eine Entspannungskammer durchläuft, dabei ausdampft und das Kondensat gegebenenfalls unter Kältezufuhr abgeschieden wird.

6. Verfahren nach Anspruch 1, dadurch gekennzeichnet, daß ein Teil des Kanalsystems von außen beheizt wird und dadurch im Müll Dämpfe entstehen, die den Müll durch den Kanal transportieren.

7. Verfahren nach einem der Ansprüche 1-6, dadurch gekennzeichnet, daß feste, flüssige oder gasförmige Zuschlagstoffe in das Kanalsystem eingespeist werden, die bzw. deren Dämpfe den Transport des Mülls bewirken oder unterstützen.

8. Vorrichtung zur Durchführung des Verfahrens nach Anspruch 1, bestehend aus einem von der Außenluft abgeschlossenes Kanalsystem (14, 18) mit einer im wesentlichen gasdicht arbeitenden Mülleinlaßschleuse (12, 14), die aus einem Einlauftrichter (10) für Rohmüll (1) und einem an diesen anschließenden Einpreßkanal (14) mit Verdichter (12) gebildet ist, und aus einer im wesentlichen gasdicht arbeitende Müllauslaßschleuse (48, 49), gekennzeichnet durch einen in den Transportkanal (18) einmündenden Anschluß 19 zum Zuführen eines erwärmten Transportgases.

9. Vorrichtung nach Anspruch 8, dadurch gekennzeichnet, daß der Einpreßkanal (14) einen Müllrückfluß behindernde Elemente (15) enthält.

10. Vorrichtung nach Anspruch 8, dadurch gekennzeichnet, daß der Transportkanal (18) einen größeren Querschnitt als der Einpreßkanal (14) hat.

11. Vorrichtung nach Anspruch 8 zur Durchführung des Verfahrens nach Anspruch 1 und 4, dadurch gekennzeichnet, daß eine Einrichtung zur Wärmezufuhr (30) zum Transportkanal (18) vorgesehen ist, um im Müll einen Teilabbrand und/oder eine Pyrolyse zu erzeugen.

12. Vorrichtung nach Anspruch 8 zur Durchführung des Verfahrens nach den Ansprüchen 1 und 5, gekennzeichnet durch eine Entspannungskammer (34) zur Kondensierung der gebildeten Dämpfe und deren Ableitung aus dem Kanalsystem.

13. Vorrichtung nach Anspruch 8 zur Durchführung des Verfahrens nach den Ansprüchen 1 und 7, dadurch gekennzeichnet, daß in den Transportkanal (18) ein Anschluß (22) zum Zuführen von Zuschlagstoffen (23) einmündet.

14. Vorrichtung nach einem der Ansprüche 8-13, dadurch gekennzeichnet, daß im Kanalsystem zusätzliche mechanische Fördereinrichtungen (29, 46), wie Förderketten, Schnecken odgl., angeordnet sind.

15. Vorrichtung nach einem der Ansprüche 12-14, dadurch gekennzeichnet, daß die Entspannungskammer (34) in Transportrichtung hinter dem Transportkanal (18) liegt, ein größeres Volumen als jender aufweist und eine Einrichtung (34b, 43) zum Auskondensieren von Dämpfen enthält.

16. Vorrichtung nach einem der Ansprüche 8-15, dadurch gekennzeichnet, daß die Müllauslaßschleuse wahlweise durch eine Weiche (52) mit einem Bunker (50) und/oder der Einlaßschleuse (10) verbindbar ist.

**Claims**

1. A method of processing untreated refuse into a storable form, the refuse being introduced into a ducting system which is sealed off from the external air, characterised in that the refuse is conveyed through the ducting system by a conveyor gas; the refuse is dried and degassed by the heated conveyor gas during conveyance ; and the dried and degassed refuse is compressed.

2. A method according to claim 1, characterised in that the conveyor gas used has no oxygen content and converts moisture in the refuse into vapour which assists the refuse conveyance.

3. A method according to claim 1 or 2, characterised in that the conveyor gas used is a low-temperature waste gas from refuse incineration, said gas being filtered on the still wet refuse.

4. A method according to any one of claims 1 to 3, characterised in that partial combustion and/or pyrolysis is/are effected in the refuse by heat supply in the ducting system and the resulting vapour and gas are used for refuse conveyance through the system.

5. A method according to claim 1, characterised in that the refuse passes through an expansion chamber in the system, and in so doing evaporates and the condensate is separated, cold being supplied if necessary.

6. A method according to claim 1, characterised in that part of the ducting system is externally heated and thus vapour forms in the refuse and conveys the latter through the ducting.

7. A method according to any one of claims 1 to 6, characterised in that solid, liquid or gaseous additives are introduced into the duct system, said additives or the vapour thereof effecting or assisting the refuse conveyance.

8. Apparatus for performing the method according to claim 1, consisting of a ducting system (14, 18) sealed from the external air and having a substantially gas-tight refuse inlet lock (12, 14) formed by an inlet hopper (10) for untreated refuse (1) followed by a pressing duct (14) with a compressor (12) and a substantially gas-tight refuse outlet lock (48, 49), characterised by a connection (19) for the supply of a heated conveyor gas, said connection (19) leading into the conveying duct (18).

9. Apparatus according to claim 8, characterised in that the pressing duct (14) contains elements (15) to prevent any refuse reflux.

10. Apparatus according to claim 8, characterised in that the conveying duct (18) has a larger cross-section than the pressing duct (14).

11. Apparatus according to claim 8 for performing the method according to claims 1 and 4, characterised in that means (30) are provided for supplying heat to the conveying duct (18) in order to produce partial combustion and/or pyrolysis in the refuse.

12. Apparatus according to claim 8 for performing the method according to claims 1 and 5, characterised by an expansion chamber (34) for condensing the resulting vapour and discharging the same from the ducting system.

13. Apparatus according to claim 8 for performing the method according to claims 1 and 7, characterised in that a connection (22) for supplying additives (23) leads into the conveying duct (18).

14. Apparatus according to any one of claims 8 to 13, characterised in that additional mechanical conveyor means (29, 46) such as conveyor chains, screws, or the like, are provided in the ducting system.

15. Apparatus according to any one of claims 12 to 14, characterised in that the expansion chamber (34) is situated after the conveying duct (18) as considered in the conveying direction, has a larger volume than the same, and contains means (34b, 43) for condensing out vapour.

16. Apparatus according to any one of claims 8 to 15, characterised in that the refuse outlet lock is optionally connectable to a bunker (50) and/or the inlet lock (10) via routing means (52).

**Revendications**

1. Procédé de transformation d'ordures brutes en une forme apte au stockage, dans lequel on introduit les ordures dans un système de conduits isolé de l'air extérieur, caractérisé en ce que l'on transporte les ordures à travers le système de conduits au moyen d'un gaz transporteur, que l'on sèche les ordures au moyen du gaz transporteur chauffé pendant le transport et qu'on les dégaze, et que l'on comprime les ordures séchées et dégazées.

2. Procédé selon la revendication 1, caractérisé en ce que l'on utilise un gaz transporteur ne contenant pas d'oxygène, qui convertit l'humidité contenue dans les ordures en vapeur qui facilitent le transport des ordures.

3. Procédé selon l'une des revendications 1 et 2, caractérisé en ce que comme gaz transporteur on utilise un gaz résiduaire à basse température venant d'une combustion d'ordures et que l'on filtre sur les ordures encore humides.

4. Procédé selon l'une des revendications 1 à 3, caractérisé en ce que, par apport de chaleur, on effectue dans les ordures, à l'intérieur du système de conduits, une combustion partielle et/ou une pyrolyse et que l'on utilise les vapeurs et gaz alors formés pour le transport des ordures à travers le système.

5. Procédé selon la revendication 1, caractérisé en ce que les ordures parcourent dans le système une chambre de détente, où elles se déshumidifient et que l'on sépare le condensat, éventuellement avec apport de froid.

6. Procédé selon la revendication 1, caractérisé en ce que l'on chauffe de l'extérieur une partie du système de conduits et que par suite, il se forme dans les ordures des vapeurs qui transportent les ordures à travers le conduit.

7. Procédé selon l'une des revendications 1 à 6, caractérisé en ce que l'on introduit dans le système de conduits des additifs solides, liquides ou gazeux qui assurent ou facilitent, ou dont les vapeurs assurent ou facilitent le transport des ordures.

8. Appareil pour la mise en œuvre du procédé selon la revendication 1, se composant d'un système de conduits (14, 18) isolé de l'air extérieur et muni d'un sas d'entrée d'ordures (12, 14) fonctionnant pratiquement hermétiquement qui est formé d'une trémie d'introduction (10) destinée aux ordures brutes (1) et d'un conduit d'introduction sous pression (14) avec compresseur (12) qui fait suite à la trémie, et d'un sas de sortie d'ordures (48, 49) fonctionnant pratiquement hermétiquement, caractérisé par un raccordement (19) débouchant dans le conduit de transport (18) et destiné à l'amenée d'un gaz de transport chauffé.

9. Appareil selon la revendication 8, caractérisé par le fait que le conduit d'introduction sous pression (14) contient des éléments (15) qui entravent un reflux des ordures.

10. Appareil selon la revendication 8, caractérisé en ce que le conduit de transport 18) a une plus grande section que le conduit d'introduction sous pression (14).

11. Appareil selon la revendication 8 pour la mise en œuvre du procédé selon les revendications 1 et 4, caractérisé par le fait qu'il comporte un dispositif d'apport de chaleur (30) au conduit de transport (18) de manière à engendrer dans les ordures une combustion partielle et/ou une pyrolyse.

12. Appareil selon la revendication 8 pour la mise en œuvre du procédé selon les revendications 1 et 5, caractérisé par une chambre de détente (34) pour la condensation des vapeurs formées et leur évacuation hors du système de conduits.

13. Appareil selon la revendication 8 pour la mise en œuvre du procédé selon les revendications 1 et 7, caractérisé par le fait que dans le conduit de transport (18) débouche un raccordement (22) pour l'amenée d'additifs (23).

14. Appareil selon l'une des revendications 8 à 13, caractérisé par le fait que dans le système de conduits sont disposés des dispositifs transporteurs mécaniques supplémentaires (29, 46) tels que des chaînes transporteuses, des vis etc.

15. Appareil selon l'une des revendications 12 à 14, caractérisé en ce que la chambre de détente (34) est située dans le sens de transport après le conduit de transport (18), qu'elle a un plus grand volume que celui-ci et qu'elle contient un dispositif (34b, 43) pour la condensation de vapeurs.

16. Appareil selon l'une des revendications 8 à 15, caractérisé en ce que le sas de sortie d'ordures peut être relié au choix, par un aiguillage (52), à une soute et/ou au sas d'entrée (10).